# EUROPEAN PATENT APPLICATION

(11) **EP 3 409 992 A1**
(43) Date of publication of application: **05.12.2018**
(21) Application number: 17186167.7
(22) Date of filing: 14.08.2017
(51) Int. Cl.: F16L 17/04, F16L 21/00

(54) **GROOVED COUPLER**

(30) Priority: 31.05.2017 KR 20170067907
(71) Applicant: Wondae TGK Co., Ltd., Gwangju-si, Gyeonggi-do 12721 (KR)
(72) Inventor: KANG, Hanpyo, 12601 Gyeonggi-do (KR); JANG, Chul-Min, Gyeonggi-do 12251 (KR)
(74) Representative: Cabinet Chaillot

(57) **Abstract**

A grooved coupler according to the present invention includes: a gasket generally having a ring shape, and having an elastic part formed in a rectangular hollow pipe shape with a space therein at an outer part of the ring shape in a cross-section of the ring shape and inclined at lower and upper portions of the rectangular pipe and an elastic band communicating with the elastic part at an inner part of the ring shape; and a first coupling housing and a second coupling housing each having a pressurizing tube for covering the gasket in a direction perpendicular to the central axis of the ring shape to cover the gasket, in which the pressurizing tubes are each formed in an arc shape and have a radius of curvature different from the gasket.

## Description

### BACKGROUND OF THE INVENTION

### Field of the Invention

The present invention relates to a grooved coupler that is disposed between two pipes and is coupled to a groove at an end of one of the pipes in a grooved mechanical pipe joining system.

### Description of the Related Art

In general, a grooved mechanical pipe joining system (also called a 'non-welding pipe joining system) includes a sealer, two pipes each having a groove on the outer side, a lower pipe housing, an upper pipe housing, and bolts.

The sealer is inserted into the lower and upper pipe housings that have substantially a ring shape and then the two pipes may be inserted into or separated out of the lower and upper pipe housings through both sides of the lower and upper pipe housings. The lower pipe housing and the upper pipe housing are made of metal and the sealer is made of rubber.

After the two pipes are inserted in the lower pipe housing and the upper pipe housing, the sealer is positioned between the two pipes and covers ends of the pipes in the lower pipe housing and the upper pipe housing. The bolts are tightened through the lower pipe housing and the upper pipe housing at both sides of the two pipes, thereby fastening the lower pipe housing and the upper pipe housing.

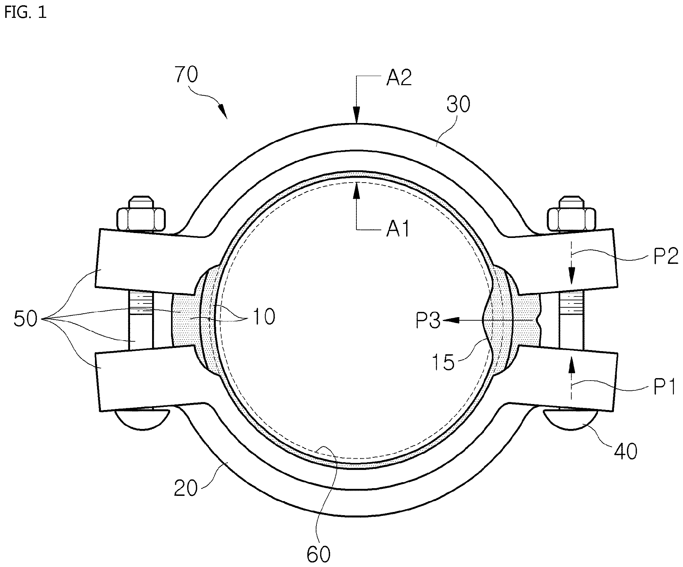

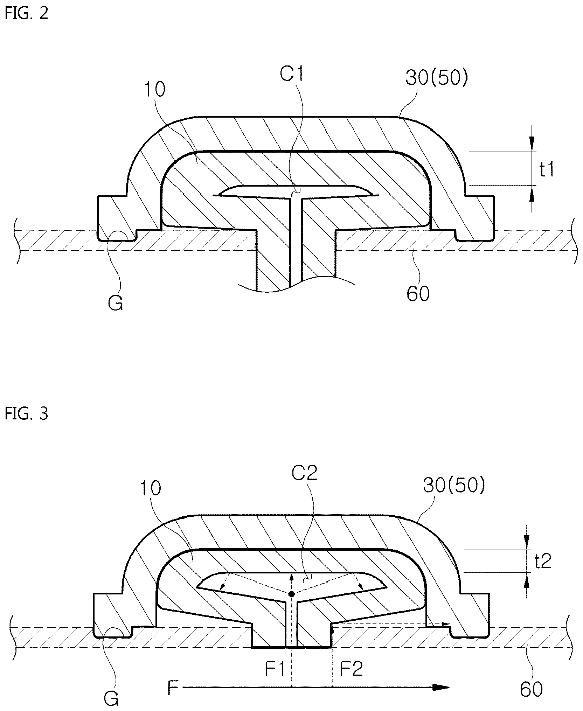

When the lower pipe housing and the upper pipe housing are fastened by the bolts, they compress the sealer and are coupled to the grooves of the two pipes. Accordingly, the grooved mechanical pipe joining system reduces the work time, as compared with pipe joining systems that use welding, bolts, and flanges. The grooved mechanical pipe joining system is shown in detail in FIGS. 1 and 2.

FIG. 1 is a front view showing a position relationship between a grooved coupler and pipes in a grooved mechanical pipe joining system of the related art.

Referring to FIG. 1, a grooved mechanical pipe joining system 70 includes a grooved coupler 50 and two pipes 60 each respectively having a groove on the outer side. The grooved coupler 50 is composed of a sealer 10, a lower pipe housing 20, an upper pipe housing 30, and bolts 40.

The fastening relationship between the pipes 60 and the sealer 10, lower pipe housing 20, upper pipe housing 30, and bolts 40 was described above. When the lower pipe housing 20 and the upper pipe housing 30 are fastened by the bolts 40, the lower pipe housing 20 and the upper pipe housing 30 generate compressive forces P1 and P2 toward each other through the bolts 40.

In detail, the lower pipe housing 20 and the upper pipe housing 30 press the top and bottom of the sealer 10 with the compressive forces P1 and P2, whereby a total compressive force P3 is applied to the sealer 10 around the bolts 40. The total compressive force P3 deforms the sealer 10 around the bolts 40, so an undesired shape 15 is formed toward the center from the outer side of the sealer 10.

When the two pipes 60 are inserted into the grooved coupler 50 through both sides of the grooved coupler 50, the ends of the two pipes 60 are covered by the sealer 10, but the sealer 10 is deformed into the undesired shape 15 around the bolts 40 and the undesired shape 15 generates a gap between the ends of the two pipes 60, so liquid that flows through the two pipes 60 may leak.

FIGS. 2 and 3 are cross-sectional views taken along the cutting line shown in FIG. 2 and showing the mechanism of the grooved coupler.

Referring to FIGS. 2 and 3, when the grooved coupler 50 is fastened to the two pipes 60, it is fitted in the grooves G on the pipes 60 in contact with the outer sides of the pipes 60. In the grooved coupler 50, the upper pipe housing 30 presses the sealer 10 and covers the ends of the pipes 60.

The sealer 10 is slightly spaced at an angle from the ends of the pipes 60 due to the shapes of the pipes 60. The sealer 10 has a first thickness t1 and a first space C1 therein in the upper pipe housing 30. When liquid flows along a flow line F in the two pipes 60, it turns along a first flow line F1 between the two pipes 60, flows into the first space C1 of the sealer 10, and presses the sealer 10, so the sealer 10 is compressed into a second thickness t2 from the first thickness t1.

Further, the first space C1 of the sealer 10 is expanded into a second space C2 by the pressure of the liquid flowing along the first flow line F1 and the sealer 10 spaced from the outer sides of the pipes 60, so a gap is formed between the sealer 10 and the pipes 60. The liquid may turn along a second flow line F2 from the flow line F and flow into the gap between the sealer 10 and the pipes 60.

The grooved mechanical pipe joining system has been disclosed in Korean Patent No. 10-1244771.

### SUMMARY OF THE INVENTION

The present invention has been made in an effort to solve the problems in the related art and an object of the present invention is to provide a grooved coupler that can prevent liquid flowing through two pipes from leaking from a gasket by fastening the pipes without deformation of the gasket between a first coupling housing and a second coupling housing and maintaining the shape of the gasket without generating a gap between the gasket and the pipes.

A grooved coupler according to the present invention is disposed between two pipes and coupled to grooves on the pipes to connect the pipes in a grooved mechanical pipe joining system. The grooved coupler includes: a gasket generally having a ring shape, and having an elastic part formed in a rectangular hollow pipe shape with a space therein at an outer part of the ring shape in a cross-section of the ring shape and inclined toward both edges from a center of the rectangular pipe at lower and upper portions of the rectangular pipe and an elastic band communicating with the elastic part at an inner part of the ring shape and radially exposing an inside of the elastic part toward a central axis of the ring shape; and a first coupling housing and a second coupling housing each having a pressurizing tube for covering the gasket in a direction perpendicular to the central axis of the ring shape to cover the lower portion and the upper portion of the gasket, in which the pressurizing tubes are each formed in an arc shape and have a radius of curvature different from the gasket.

The elastic part may have a width larger than the elastic band in a direction of the central axis of the ring shape.

The elastic part may have an outer wall and an inner wall that face an outer side and an inner side of the gasket, respectively, and the outer wall and the inner wall may be inclined with respect to the central axis of the ring shape.

The outer wall and the inner wall may be radially inclined in a direction inclined with respect to the central axis of the ring shape.

The outer wall may be inclined further than the inner wall with respect to the central axis of the ring shape.

The outer wall may have both edges higher than a center portion.

The inner wall may be perpendicular to the elastic band.

The inner wall and the outer wall may have a smooth surface.

The elastic band may have two partition walls protruding from the inner wall, and the partition walls may be formed in parallel with each other on the inner wall and may expose the inside of the elastic part to the outside.

The elastic part may further have lower watertight nodes protruding from the inner wall at both sides of the elastic band, and the lower watertight nodes may be shorter in height than the partition walls on the inner wall.

The elastic part may further have at least one upper watertight node protruding from the outer wall to surround the central axis of the ring shape, and the upper watertight node may be shorter in height than the partition walls on the inner wall.

The elastic part may further have the same number of or different numbers of lower watertight nodes and upper watertight nodes protruding from the inner wall and the outer wall, and the lower watertight nodes and the upper watertight nodes may be shorter in height than the partition walls.

The elastic band may further have tight-fitting nodes spaced from the inner wall and protruding away from each other from the partition walls along the central axis of the ring shape, and the tight-fitting nodes may have an area smaller than the inner wall.

The pressurizing tubes may have a pressurizing surface that covers the elastic part, exposes the elastic band, and sequentially comes in contact with both edges and the center portion of the outer wall when external force is applied to the elastic part.

The pressurizing surface may have a radius of curvature different from the both edges or the center portion.

When the first coupling housing and the second coupling housing press the gasket, the pressurizing surface may come in contact with the outer wall of the elastic part at a center portion of the pressurizing tube and may be spaced from the outer wall of the elastic part at both ends of the pressurizing tube.

The first coupling housing or the second coupling housing may have handle parts horizontally protruding from both ends of the pressurizing tube, the first coupling housing and the second coupling housing may be fastened to each other by bolts inserted through the handles, thereby pressing the gasket, and the gasket may expand toward the handle parts of the first coupling housing and the second coupling housing and come in contact with pressurizing surfaces of the first coupling housing and the second coupling housing, when being pressed by the first coupling housing and the second coupling housing.

According to the present invention, since the outer wall and the inner wall of the elastic part positioned at the outer part in the gasket generating having a ring shape are inclined with respect to the central axis of the ring shape, when the first and second coupling housings are fastened to two pipes to achieve a grooved mechanical pipe joining system, the elastic parts are brought in contact with the first coupling housing, the second coupling housing, and the pipes between the pipes, whereby it is possible to actively prevent fluid flowing through the pipes from leaking from the gasket.

According to the present invention, when the first and second coupling housings and two pipes are coupled to achieve a grooved mechanical pipe joining system, the first and second coupling housings are fastened by bolts, so when the first and second coupling housing press the gasket on the pipes, the outer walls of the elastic parts are brought in contact with the pressurizing surfaces of the first and second coupling housing without a wrinkle around the bolts, whereby it is possible to actively prevent fluid flowing through the pipes from leaking from the gasket.

According to the present invention, since at least one node band protruding from the inner wall and/or the outer wall of the elastic part is formed around the gasket, when the first and second coupling housings and two pipes are coupled to achieve a grooved mechanical pipe joining system, the node bands are brought in contact with the first and second coupling housings and/or the pipes when the gasket is pressed on the pipes by the first and second coupling housings, whereby it is possible to actively prevent fluid flowing through the pipes from leaking from the gasket.

### BRIEF DESCRIPTION OF THE DRAWINGS

FIG. 1 is a front view showing a position relationship between a grooved coupler and pipes in a grooved mechanical pipe joining system of the related art;
FIGS. 2 and 3 are cross-sectional views taken along the cutting line shown in FIG. 2 and showing the mechanism of the grooved coupler;
FIG. 4 is an exploded view showing a grooved coupler according to the present invention;
FIG. 5 is a front view of a gasket shown in FIG. 4;
FIG. 6 is a cross-sectional view of the gasket taken along line B1-B2 shown in FIG. 4;
FIG. 7 is a perspective view of the gasket cut along line B1-B3 shown in FIG. 4;
FIGS. 8 and 9 are cross-sectional views showing a first modification of the gasket shown in FIG. 6;
FIG. 10 is a cross-sectional view showing a second modification of the gasket shown in FIG. 6;
FIG. 11 is a schematic view showing a positional relationship between the gasket and a first or second coupling housing shown in FIG. 4;
FIG. 12 is a rear view showing the first or second coupling housing shown in FIG. 11;
FIG. 13 is a plan view showing the first or second coupling housing shown in FIG. 11; and
FIGS. 14 and 15 are cross-sectional view illustrating mechanism of the grooved coupler shown in FIG. 3, in a grooved mechanical pipe joining system according to the present invention.

### DETAILED DESCRIPTION OF THE INVENTION

Embodiments of the present invention will be described in detail below with reference to the accompanying drawings in order for those skilled in the art to be able to easily implement the present invention.

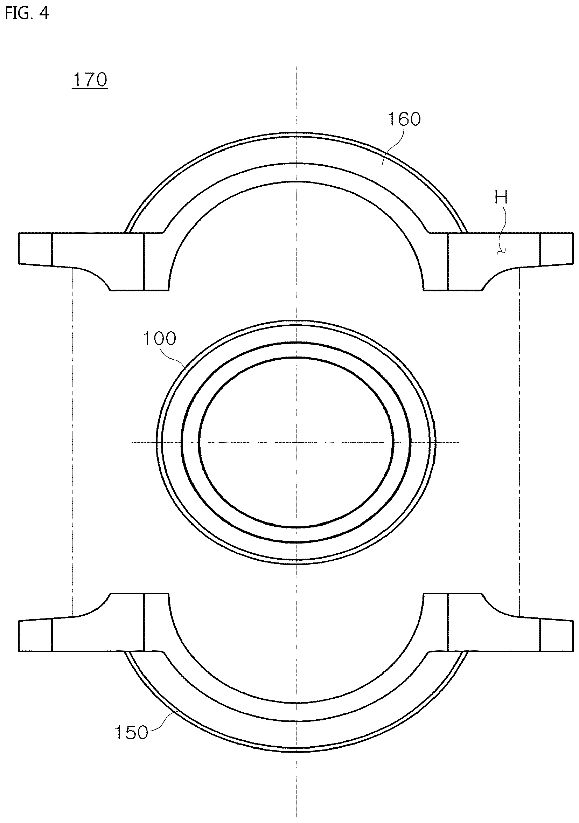

FIG. 4 is an exploded view showing a grooved coupler according to the present invention.

Referring to FIG. 4, a grooved coupler 170 according to the present invention is disposed between two pipes (60 in FIG. 1, 2, or 15) and coupled to grooves G on the pipes 60 to connect the pipes 60 in a grooved mechanical pipe joining system.

The grooved coupler 170 includes a gasket 100, a first coupling housing 150, a second coupling housing 160, and bolts (40 in FIG. 1). The entire shape of the gasket 100 is a ring and includes an elastic material, for example, rubber or synthetic resin.

The first coupling housing 150 and the second coupling housing 160 are put over the gasket 100 to correspond to the outer shape of the gasket 100 such that the gasket 100 is partially exposed between the first coupling housing 150 and the second coupling housing 160. The pipes 60 are inserted to face each other between the first and second coupling housings 150 and 160.

The pipes 60 are in contact with the gasket 100 partially exposed between the first coupling housing 150 and the second coupling housing 160. The first coupling housing 150 and the second coupling housing 160 may be made of metal.

The bolts 40 are inserted in bolt holes H of the first coupling housing 150 and the second coupling housing 160, whereby the first coupling housing 150 and the second coupling housing 160 can be fastened to each other. The first coupling housing 150 and the second coupling housing 160 are fastened, they can press the gasket 100 toward the center of the gasket 100.

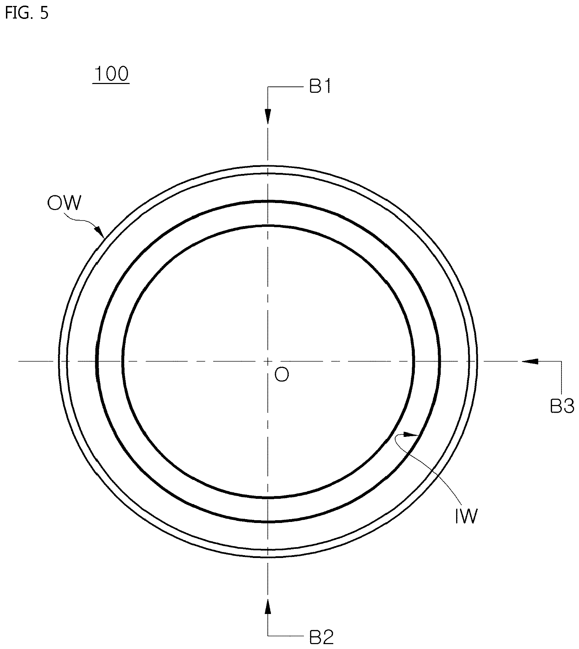

The gasket 100, the first coupling housing 150, and the second coupling housing 160 will be described in detail below with reference to FIGS. 5 to 13.

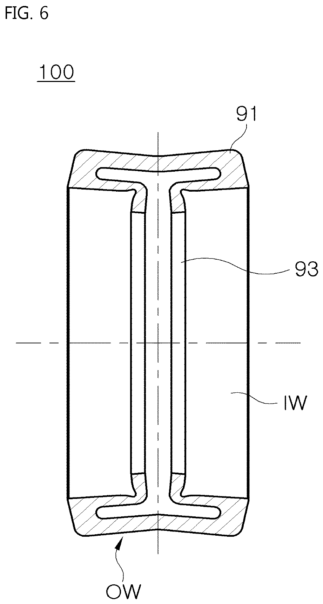

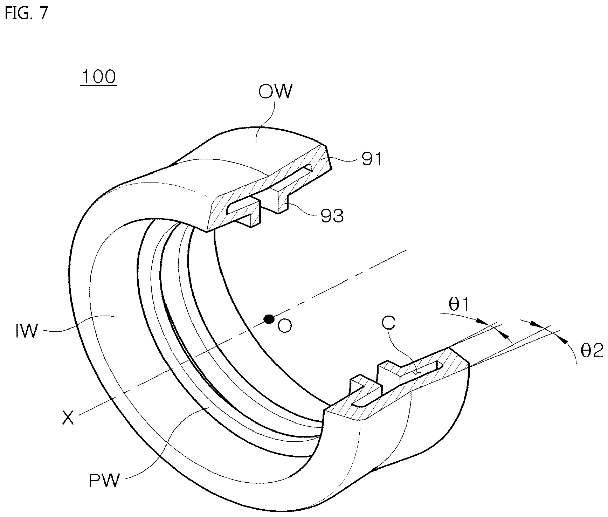

FIG. 5 is a front view of the gasket shown in FIG. 4 and FIG. 6 is a cross-sectional view of the gasket taken along line B1-B2 shown in FIG. 4. FIG. 7 is a perspective view of the gasket cut along line B1-B3 shown in FIG. 4.

Referring to FIGS. 5 to 7, the gasket 100 generally has a ring shape, as shown in FIG. 5. In detail, in the ring-shaped cross-section shown in FIG. 7, the gasket 100 has an elastic part 91 at the ring-shaped outer part and an elastic band at the ring-shaped inner part.

The elastic part 91 has a width larger than the elastic band 93 in the direction of the central axis X (shown in FIG. 7) of the ring shape. The elastic part 91 is formed in a rectangular hollow pipe shape with a space C therein and inclined toward both edges from the center of the rectangular pipe at the lower and upper portions of the rectangular pipe, as shown in FIG. 6. The elastic part 91 has an outer wall OW and an inner wall IW that face the outside and inside of the gasket 100, respectively, as shown in FIG. 5, 6, or 7.

The outer wall OW and the inner wall IW are inclined with respect to the central axis X of the ring shape, as shown in FIG. 6 or 7. In detail, the outer wall OW and the inner wall IW are radially inclined in a direction inclined with respect to the central axis X of the ring shape. The outer wall OW and the inner wall IW have a smooth surface, as shown in FIG. 7.

The outer wall OW is inclined further than the inner wall IW with respect to the central axis of the ring shape. In detail, the inner wall IW is inclined at a first angle θ1 with respect to the central axis X of the ring shape, as shown in FIG. 7. The outer wall OW is inclined at a second angle θ2 larger than the first angle θ1 with respect to the central axis X of the ring shape, as shown in FIG. 7.

Both edges of the outer wall OW are higher than the center portion, as shown in FIG. 6 or 7. On the other hand, the elastic band 93 communicates with the elastic part 91, thereby exposing the inside of the elastic part 91 radially toward the central axis X of the ring shape, as shown in FIG. 7.

In detail, the elastic band 93 has two partition walls PW protruding from the inner wall IW, as shown in FIG. 6 or 7. The partition walls PW are formed in parallel with each other on the inner wall IW and exposes the inside of the elastic part 91 to the outside. The inner wall IW makes a right angle with the elastic band 93.

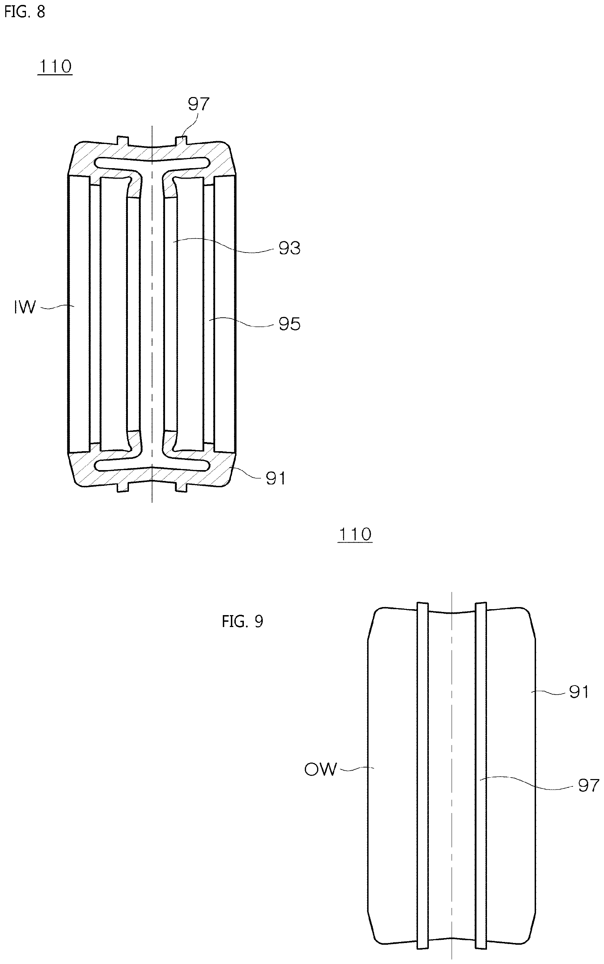

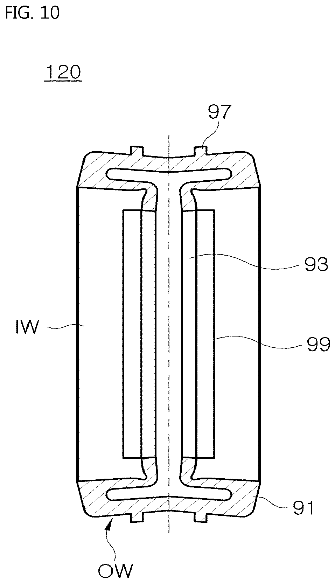

FIGS. 8 and 9 are cross-sectional view showing a first modification of the gasket shown in FIG. 6 and FIG. 10 is a cross-sectional view showing a second modification of the gasket shown in FIG. 6.

Referring to FIGS. 8 and 9, a gasket 110 according to a first modification of the present invention has a shape similar to that of the gasket 100 shown in FIGS. 5 to 7, but may further have the same number of or different numbers of lower watertight nodes 95 and upper watertight nodes 97 protruding from the inner wall IW and the outer wall OW of an elastic part 91.

The lower watertight nodes 95 and the upper water tight nodes 97 are shorter in height than the two partition walls PW of the elastic band 93. Alternatively, the elastic part 91 may have lower watertight nodes 95 protruding from the inner wall IW at both sides of the elastic band 93. The elastic part 91 may have a smooth surface on the outer wall OW.

The lower watertight nodes 95 may be shorter in height from the inner wall IW than the two partition walls PW of the elastic band 93. Further, the elastic part 91 may have at least one upper watertight node 97 protruding from the outer wall OW to surround the central axis X (shown in FIG. 7) of the ring shape.

The elastic part 91 may have a smooth surface on the inner wall IW. The upper watertight node 97 may be shorter in height from the inner wall IW than the two partition walls PW of the elastic band 91.

Referring to FIG. 10, a gasket 120 according to a second modification of the present invention has a shape similar to the gasket 100 shown in FIGS. 5 to 7, but may have tight-fitting nodes 99 spaced from the inner wall IW and protruding away from each other from two partition walls PW of the elastic band 93 along the central axis X (shown in FIG. 7) of the ring shape. The tight-fitting nodes 99 have an area smaller than that of the inner wall IW.

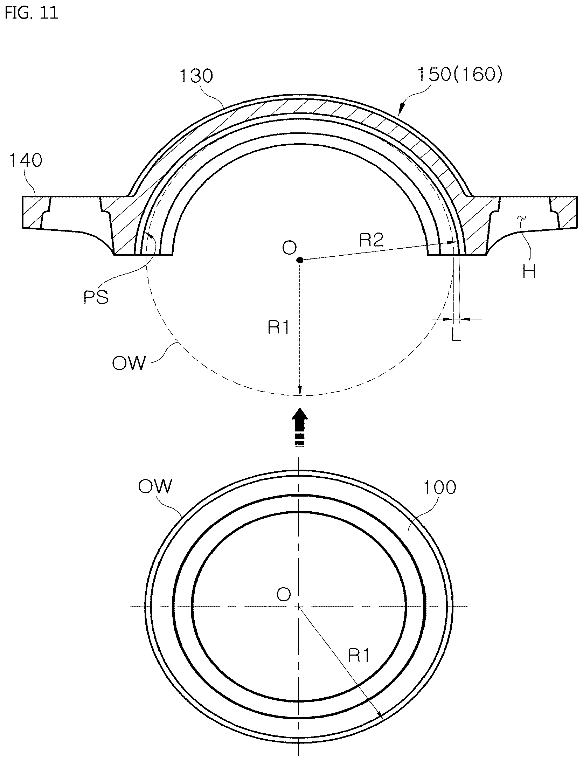

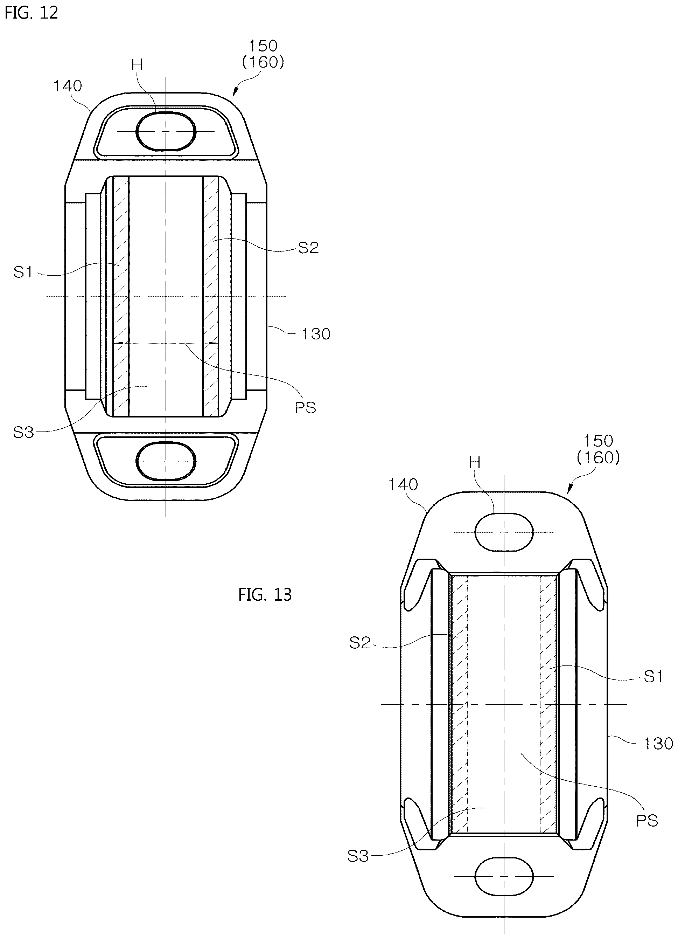

FIG. 11 is a schematic view showing a positional relationship between the gasket and a first or second coupling housing shown in FIG. 4. FIG. 12 is a rear view showing the first or second coupling housing shown in FIG. 11, and FIG. 13 is a plan view showing the first or second coupling housing shown in FIG. 11.

Referring to FIGS. 11 to 13, the first coupling housing 150 and the second coupling housing 160, as described above with reference to FIG. 4, are put on the bottom and the top of the gasket 100, respectively, to cover the gasket 100. The first coupling housing 150 or the second coupling housing 160, as shown in FIG. 11, has a pressurizing tube 130 and handle parts 140.

The pressurizing tube 130 covers the gasket 100 in a direction perpendicular to the central axis X (shown in FIG. 7) of the ring shape. The pressurizing tube 130 is formed in an arc shape and has a radius of curvature different from that of the gasket 100. In detail, the pressurizing tube 130 has a pressurizing surface PS that covers the elastic part 91, exposes the elastic band 93, and sequentially comes in contact with both edges and the center portion of the outer wall when external force is applied to the elastic part 91, as show in FIG. 11, 12, or 13.

The pressurizing surface PS is a smooth surface formed along the arc shape, in which a first surface S1 and a second surface S2 come in contact with both edges of the outer wall OW of the elastic part 91 (shown in FIG. 7) and a third surface S3 comes in contact with the center portion of the outer wall OW of the elastic part 91, as shown in FIG. 12 or 13. The pressurizing surface PS has a radius of curvature different from those of both edges or the center portion of the outer wall OW of the elastic part 91.

That is, the outer wall OW and the pressurizing surface PS make conical circles, as shown in FIG. 11, the outer wall OW is in contact with a circle having a first radius R1 around the center O of the gasket 100, and the pressurizing surface PW is in contact with the circle having the first radius R1 and a circle having a second radius R2 around the center O of the gasket 100. The first radius R1 is smaller than the second radius R2.

When the first coupling housing 150 and the second coupling housing 160 do not press the gasket 100, the pressurizing surface PS is in contact with the outer wall OW of the elastic part 91 at the center portion of the pressurizing tube 130 and is spaced at a predetermined distance L from the outer wall OW of the elastic part 91 at both ends of the pressurizing tube 30, as shown in FIG. 11.

The handle parts 140 horizontally protrude from both ends of the pressurizing tube 130. The first coupling housing 150 and the second coupling housing 160 are fastened to each other to press the gasket 100 by the bolts 40 (shown in FIG. 1) inserted in the holes H at the handle parts 140 facing each other.

The gasket 100 expands toward the handle parts 140 of the first coupling housing 150 and the second coupling housing 160 when pressed by the first coupling housing 150 and the second coupling housing 160, whereby the gasket 100 is brought in contact with the pressurizing surfaces PS of the first coupling housing 150 and the second coupling housing 160 without a wrinkle.

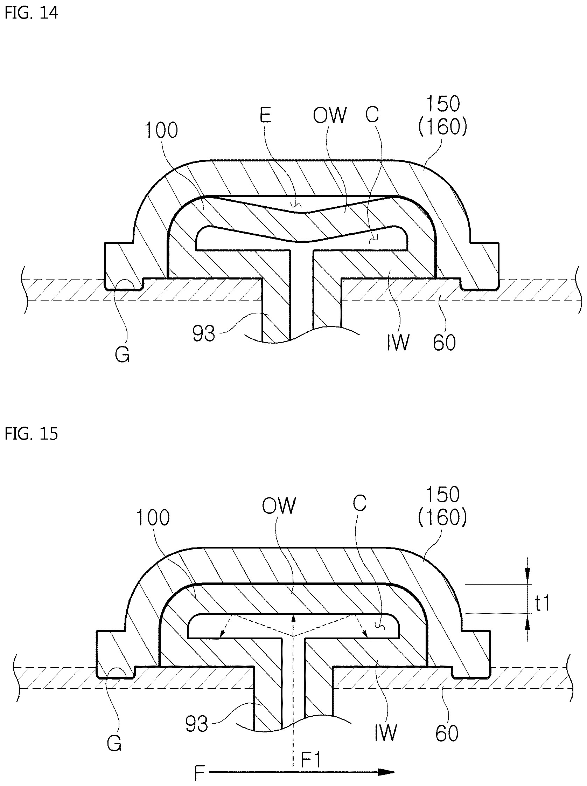

FIGS. 14 and 15 are cross-sectional views illustrating mechanism of the grooved coupler shown in FIG. 3, in a grooved mechanical pipe joining system according to the present invention.

Referring to FIG. 14, the two pipes 60 and the grooved coupler 170 may be prepared to achieve a grooved mechanical pipe joining system. Next, the pipes 60 may be inserted into the grooved coupler 170. The pipes 60 may be in contact with the elastic band 93 of the gasket 100 inside the grooved coupler 170.

Accordingly, the pipes 60 may face each other in the grooved coupler 170. Next, in the grooved coupler 170, the gasket 100 may be pressed by the bolts 40, the first coupling housing 150, and the second coupling housing 160.

In detail, the first coupling housing 150 or the second coupling housing 160 may press the gasket 100 on the pipes 60 by the bolts 40. When the gasket 100 is pressed by the first coupling housing 150 or the second coupling housing 160, it is pressed by both edges of the outer wall OW (see FIG. 7), so it can strongly press the inner wall IW to the pipes 60.

Further, the gasket 100 may form an empty space E over the center portion of the outer wall OW in cooperation with the first coupling housing 150 or the second coupling housing 160. Accordingly, the gasket 100 can have a smaller space C when pressed by the first coupling housing 150 or the second coupling housing 160, as shown in FIG. 14, as compared with when separated from the first coupling housing 150 or the second coupling housing 160, as shown in FIG. 7.

Referring to FIG. 15, liquid may flow along a flow line F in the pipes 60. The liquid may flow into the elastic band 93 along the first flow line F1 diverging from the flow line F. The liquid may expand the space C of the gasket 100 while flowing along the first flow line F1.

Since the inner wall IW of the gasket 100 has been pressed by the outer wall OW, the liquid does not move the gasket 100 in the first coupling housing 150 or the second coupling housing 160. Further, the gasket 100 may have a thickness t1 that is the same as before the liquid flows through the pipes 60. That is, the thickness t1 of the gasket 100 may be the same as the thickness t1 of the sealer 10 shown in FIG. 1.

However, the liquid does not have the second flow line F1 shown in FIG. 1 between the gasket 100 and the pipes 60. Accordingly, the gasket 100 is brought in contact with the pressurizing surface PS of the first coupling housing 150 or the second coupling housing 160 without a wrinkle, as shown in FIGS. 11 to 13, without generating the second flow line F2 of liquid on the pipes 60 shown in FIG. 1, so the liquid does not leak from the pipes 60.

## Claims

1. A grooved coupler that is disposed between two pipes and coupled to grooves on the pipes to connect the pipes in a grooved mechanical pipe joining system, the grooved coupler comprising:
a gasket generally having a ring shape, and having
an elastic part formed in a rectangular hollow pipe shape with a space therein at an outer part of the ring shape in a cross-section of the ring shape and inclined toward both edges from a center of the rectangular pipe at lower and upper portions of the rectangular pipe, and
an elastic band communicating with the elastic part at an inner part of the ring shape and radially exposing an inside of the elastic part toward a central axis of the ring shape; and
a first coupling housing and a second coupling housing each having a pressurizing tube for covering the gasket in a direction perpendicular to the central axis of the ring shape to cover the lower portion and the upper portion of the gasket,
wherein the pressurizing tubes of the first and second coupling housings are each formed in an arc shape and have a radius of curvature different from the gasket.

2. The grooved coupler of claim 1, wherein the elastic part has a width larger than the elastic band in a direction of the central axis of the ring shape.

3. The grooved coupler of claim 1, wherein the elastic part has an outer wall and an inner wall that face an outer side and an inner side of the gasket, respectively, and
the outer wall and the inner wall are inclined with respect to the central axis of the ring shape.

4. The grooved coupler of claim 3, wherein the outer wall and the inner wall are radially inclined in a direction inclined with respect to the central axis of the ring shape.

5. The grooved coupler of claim 3, wherein the outer wall is inclined further than the inner wall with respect to the central axis of the ring shape.

6. The grooved coupler of claim 3, wherein the outer wall has both edges higher than a center portion.

7. The grooved coupler of claim 3, wherein the inner wall is perpendicular to the elastic band.

8. The grooved coupler of claim 3, wherein the inner wall and the outer wall have a smooth surface.

9. The grooved coupler of claim 3, wherein the elastic band has two partition walls protruding from the inner wall, and
the partition walls are formed in parallel with each other on the inner wall and expose the inside of the elastic part to the outside.

10. The grooved coupler of claim 9, wherein the elastic part further has lower watertight nodes protruding from the inner wall at both sides of the elastic band, and
the lower watertight nodes are shorter in height than the partition walls on the inner wall.

11. The grooved coupler of claim 9, wherein the elastic part further has at least one upper watertight node protruding from the outer wall to surround the central axis of the ring shape, and
the upper watertight node is shorter in height than the partition walls on the inner wall.

12. The grooved coupler of claim 9, wherein the elastic part further has the same number of or different numbers of lower watertight nodes and upper watertight nodes protruding from the inner wall and the outer wall, and
the lower watertight nodes and the upper watertight nodes are shorter in height than the partition walls.

13. The grooved coupler of claim 9, wherein the elastic band further has tight-fitting nodes spaced from the inner wall and protruding away from each other from the partition walls along the central axis of the ring shape, and
the tight-fitting nodes have an area smaller than the inner wall.

14. The grooved coupler of claim 3, wherein the pressurizing tubes have a pressurizing surface that covers the elastic part, exposes the elastic band, and sequentially comes in contact with both edges and the center portion of the outer wall when external force is applied to the elastic part.

15. The grooved coupler of claim 14, wherein the pressurizing surface has a radius of curvature different from the both edges or the center portion.

16. The grooved coupler of claim 14, wherein when the first coupling housing and the second coupling housing press the gasket, the pressurizing surface comes in contact with the outer wall of the elastic part at a center portion of the pressurizing tube and is spaced from the outer wall of the elastic part at both ends of the pressurizing tube.

17. The grooved coupler of claim 14, wherein the first coupling housing or the second coupling housing has handle parts horizontally protruding from both ends of the pressurizing tube,
the first coupling housing and the second coupling housing are fastened to each other by bolts inserted through the handles, thereby pressing the gasket, and
the gasket expands toward the handle parts of the first coupling housing and the second coupling housing and comes in contact with pressurizing surfaces of the first coupling housing and the second coupling housing, when being pressed by the first coupling housing and the second coupling housing.
